# EUROPEAN PATENT SPECIFICATION

(11) **EP 2 089 452 B1**
(45) Date of publication and mention of the grant of the patent: **11.07.2012**
(21) Application number: 07852082.2
(22) Date of filing: 03.12.2007
(51) Int. Cl.: C08G 64/30, C08L 69/00

(54) **PROCESS FOR OBTAINING INCREASED MOLECULAR WEIGHT OF A POLYMER AND THE USE OF SAID POLYMER**
VERFAHREN ZUM ERHALT EINES ERHÖHTEN MOLEKULARGEWICHTS EINES POLYMERS UND VERWENDUNG DES POLYMERS
PROCÉDÉ SERVANT À OBTENIR UN POIDS MOLÉCULAIRE ACCRU D'UN POLYMÈRE ET UTILISATION DUDIT POLYMÈRE

(30) Priority: 04.12.2006 SE 0602588
(43) Date of publication of application: 19.08.2009
(73) Proprietor: Perstorp Specialty Chemicals AB, 284 80 Perstop (SE)
(72) Inventor: MIDELF, Birger, 262 62 Ängelholm (SE); LUNDMARK, Stefan, 263 93 Höganäs (SE); JENSEN, Lennart, 267 90 Bjuv (SE)
(74) Representative: HOFFMANN EITLE
(86) International application number: PCT/SE2007/001076
(87) International publication number: WO 2008/069725

(56) References cited:
- EP-A1- 1 134 248
- EP-A1- 1 134 248
- EP-A1- 1 707 586
- EP-A1- 1 707 586
- WO-A1-01/14453
- US-A1- 2003 125 576
- US-B2- 6 818 784
- US-B2- 6 818 784

## Description

The present invention refers to a process for producing a polycarbonate diol, triol or polyol with increased molecular weight. The process comprises transesterification between a diol, triol or polyol and a carbon dioxide source, evaporation of formed alcohol, polymerisation and further polymerisation by addition of an oligocarbonate diol, triol or polyol. In a further aspect, the use of a polycarbonate diol, triol or polyol obtained by the process as a building block in thermoplastic polyesters and polyurethanes is disclosed.

Polycarbonate polyols have existed for a long time and were first synthesised in the beginning of the 20^{th} century. Many different properties are combined within their molecular structure and compared to polyethers and polyesters the polycarbonate polyols show improvements in hydrolysis- and UV-stability and are also known to have good heat, oil and weather resistance. There is a large need for materials that are suitable for applications used under extreme conditions, such as biomedical devices, electronics, inkjet applications and outdoor coatings. Coatings are mostly cross-linked polymer systems which mainly consist of a resin that is cured thermally or by radiation. Common resins are urethanes, acrylics, epoxies and alkyds. These resins can comprise macromolecules based on polyesters, polyethers or polycarbonates. Among these macromolecules polycarbonates are least sensitive to hydrolysis, outdoor conditions and certain chemicals.

Important macromolecules for coating materials are the macrodiols that have a functionality of two as a result of the hydroxyl end groups. According to the discussion above polycarbonate diols are very interesting building blocks for polymer systems in coating materials. A strictly bifunctional polycarbonate is important for achieving high molecular weights in the secondary products produced from them. Today, polycarbonate diols based on 1,6-hexanediol are dominant in the market but there are also other monomer alternatives.

There are several ways of producing polycarbonates. Some examples are the reactions of polyols with phosgene (direct phosgenation), cyclic carbonates (ring opening polymerisation) and dialkyl carbonates or diaryl carbonates (transesterification). Phosgene is a toxic gas which is hard to handle safely and the other methods have been developed to avoid this.

The most common of these processes is the transesterification process due to the fact that the product will be of high purity and with the hydroxyl functionality clearly defined. Diphenyl carbonate (DPC) and dimethyl carbonate (DMC) have among others been used as carbonate sources in the prior art, references include U.S. Patent Nos. 3 544 524 and 5 171 830. The carbonate is mixed with the polyol and a catalyst is added where after formed alcohol (phenol, methanol, ethanol, butanol etc) is distilled off. The separation of the alcohol from the process is done in order to drive the reaction equilibrium towards the product side. Further, to complete the reaction, vacuum is applied and unreacted carbonate along with residual and additionally formed alcohol is removed.

The use of DMC in this transesterification process has only been known since the beginning of the 1990's. In for example U.S. Patent No. 5 171 830 a diol with at least 4 carbons separating the hydroxyl groups is reacted with a diester of carbonic acid in the presence of a catalyst and at a temperature and time sufficient to produce the polymer. The diol can among others be 1,4-butanediol, 1,5-pentanediol or 1,6-hexanediol and the carbonic acid diester can be DMC. The catalyst is selected from the group consisting of tertiary amines and basic ionexchange resins containing active tertiary amino groups. The invented process allows for the catalyst to stay in the polymer solution and it does not have to be removed. This is an advantage since the separation of the catalyst before the product is used further is expensive.

When using DPC phenol is formed. Due to its high boiling point of approximately 182°C only polyols with higher boiling points than phenol can be used since they otherwise would be distilled off. Phenol is a hazardous substance which is hard to handle and since some portion of it remains in the end product, other carbonates would be preferable. This is why the use of DMC and other carbonate sources has become more common. In the DMC process methanol is formed and its low boiling point of 65°C makes it possible to use polyols with lower boiling points and shorter chains. Methanol is easier to remove from the end product compared to phenol and it is also less hazardous. The drawback of this process is the fact that unreacted DMC forms an azeotrope with methanol which makes the process more difficult since DMC is continuously lost along with the methanol. This hinders the complete conversion of DMC to polycarbonate polyols.

The low boiling point of methanol in the DMC process opens the possibility to use short chain polyols, such as different 1,3-diols. Polycarbonates of such polyols are not stable at higher temperatures since the polyols are prone to form cyclic carbonates which lead to unzipping of cyclic monomers from the polymer chain. It is therefore important to keep the temperature low to avoid this and other side effects. Two other parameters that affect the molecular weight are the pressure and the molar ratio between the carbon dioxide source and the polyol. If the purpose of the production is to achieve polycarbonates with increased molecular weights from short chain polyols the temperature and the pressure would both have to be kept low. It is however challenging to reach a low enough pressure and the process would accordingly be somewhat difficult and take some time, making it inefficient and expensive.

The European Patent application No. 1 134 248 discloses a process for preparation of polycarbonate diols with a high molecular weight comprising two reactions steps, where the first step is a transesterification between a diol and an alkyl carbonate, followed by a second step wherein the polycarbonate diol obtained in the first step undergoes a transesterification with an aryl carbonate.

The present invention provides a more efficient process for the preparation of polycarbonates with increased molecular weights from short chain polyols. The molecular weight of the polymer can conveniently be increased by adding oligocarbonates. To control the molecular weight different amounts of oligocarbonate can be added. Oligocarbonates can also be added repeatedly to further increase the molecular weight

The present invention accordingly refers to a process for producing a polycarbonate diol, triol or polyol with increased molecular weight, said polycarbonate diol, triol or polyol being produced from a diol, triol or polyol and a carbon dioxide source. The process comprises the following steps
i) transesterification between said diol, triol or polyol and said carbon dioxide source in the presence of a transesterification catalyst and at a temperature of 80-200°C,
ii) evaporation of formed alcohol by for instance distillation at a temperature of 100-200°C and
iii) polymerisation at a temperature of 100-200°C and a pressure of 0,5-100 mbar until said polymerisation is ceased,
iv) further polymerisation, at a pressure of 0,5-100 mbar and a temperature of 100-200°C, by addition of an oligocarbonate diol, triol or polyol to the product obtained in step (iii), whereby said oligocarbonate diol, triol or polyol is added in an amount of 1-50 % by weight based on the amount of said product obtained in said step (iii) and said oligocarbonate diol, triol or polyol is obtained by
   a) transesterification between a diol, triol or polyol and a carbon dioxide source in the presence of a transesterification catalyst and at a temperature of 80-200°C and
   b) evaporation of formed alcohol by for instance distillation at a temperature of 100-200°C.
whereby a polycarbonate diol, triol or polyol with an average molecular weight of at least 1000 g/mol is obtained.

The described molecular weight is the number average molecular weight, Mₙ, measured in g/mol and it is typically 1000-10000 g/mol, more preferably 1000-5000 g/mol or rather 1500-4500 g/mol.

When the reaction mixture in the first step of the process (i) is heated to reflux, reactions between the different monomers result in an equilibrium mixture of different diol, triol and polyol carbonates, formed alcohol and remaining reactants. In the second step of the process (ii), the prepolymerisation step, the alcohol is distilled off from the reaction mixture as an azeotrope with some of the carbonate and oligocarbonates are formed. In the third step (iii), the polymerisation step, the oligocarbonates react with each other and form polycarbonates.

The pressure during the polymerisation is 0.5-100 mbar, preferably 0.5-20 mbar. The molar ratio in step (i) between said diol, triol or polyol and said carbon dioxide source is between 1:1 and 1:2.

When said oligocarbonate diol, triol or polyol in step (iv) is added to the product obtained in step (iii) the polymer chains react with the oligocarbonates and are further built up, which results in an increased molecular weight of the end product. The amount of oligocarbonate diol, triol or polyol added in step (iv) is 1-50% by weight, preferably 5-20% by weight, based on the weight of the product obtained in step (iii). The molar ratio in step (iv)(a) between said diol, triol or polyol and said carbon dioxide source is between 1:1 and 1:3.

To further increase the molecular weight of the obtained polycarbonate diol, triol or polyol step (iv) can be repeated.

Said diol, triol or polyol is preferably a 5,5-dihydroxyalkyl-1,3-dioxane, a 2-carboxy-2-alkyl-1,3-propanediol, a 2-hydroxy-1,3-propanediol, a 2-hydroxy-2-alkyl-1,3-propanediol, a 2-alkyl-1,3-propanediol, a 2,2-dialkyl-1,3-propanediol, a 2-alkyl-2-hydroxyalkyl-1,3-propanediol, a 2,2-dihydroxyalkyl-1,3-propanediol or a dimer, trimer or polymer of a said 1,3-propanediol or 1,3-dioxane and/or copolymer of two or more of said 1,3-propanediols or 1,3-dioxanes.

Suitable diols, triols or polyols can in various embodiments of the present invention be exemplified by for instance a mono, di, tri or polyethylene glycol, a mono, di, tri or polypropylene glycol, a mono, di, tri or polybutylene glycol, polytetramethylene glycol, 2,2-dimethylolpropionic acid, 1,4-butanediol, 1,5-pentendediol, 1,6-hexanediol, 1,6-cyclohexanedimethanol, 1,1-cyclohexanedimethanol, 5,5-dihydoxymethyl-1,3-dioxane, 2-methyl-1,3-propanediol, 2-propyl-2-methyl-1,3-propanediol, 2,2-diethyl-1,3-propanediol, 2-ethyl-2-methyl-1,3-propanediol, 2-butyl-2-ethyl-1,3-propanediol, neopentyl glycol, dimemylolpropane, 1,1-dimethylolcyclohexane, glycerol, 1,1-dimethylolnorborane, 1,1-dimethylolnorborene, 9-bis(1,1-dimethyl-2-hydroxyethyl)-2,4,8,10-tetraoxaspiro[5,5]undecane, 1,3-cyclohexanediol, 1,4-cyclohexanediol, isosorbide, trimethylolethane, trimethylolpropane, diglycerol, ditrimethylolethane, ditrimethylolpropane, pentaerythritol, dipentaerythritol, tripentaerythritol, polypentaerythritol, anhydroenneaheptitol, tetramethylolcyclohexanol, sorbitol or mannitol.

Said carbon dioxide source includes dimethyl carbonate, diethyl carbonate, diphenyl carbonate and/or urea.

Said transesterification catalyst is an alkali metal or alkaline earth metal hydroxide and/or a metal alcoholate of an aliphatic alcohol. Examples of suitable transesterification catalysts are sodium hydroxide, potassium hydroxide, titanium tetraisopropylate, zirconium tetraisopropylate, sodium methylate and potassium methylate.

The polycarbonate diol, triol or polyol obtained by the above process may be used as a building block in for example thermoplastic polyesters and polyurethanes from which plastics, lacquers and adhesives are manufactured. Polyurethanes may for example be used for surface treatment of textiles and leather.

The present invention is further explained with reference to the embodiment examples below. The examples are only to be construed as illustrative and not limiting in any way.

Example 1 together with example 2 and example 1 together with example 3 are representing the invention whereas example 1 on its own is a comparative example.

### Example 1

Synthesis of a polycarbonate diol based on Neopentyl Glycol.

The synthesis was performed in three steps, a transesterification and a prepolymerisation step at atmospheric pressure followed by a polymerisation step at reduced pressure. In the first step dimethylcarbonate (DMC) and Neopentyl Glycol (NEO) were mixed and heated under stirring. When the total amount of NEO was dissolved in the liquid, an aqueous solution of NaOH was added slowly dropwise. The molar ratio of the above components was 1:1.5:0.001 (NEO:DMC:NaOH). The mixture was set to reflux with a starting temperature of 94°C. When the temperature had reached 81°C (300 minutes), formed methanol and remaining DMC were distilled off as an azeotrope under atmospheric pressure. Distillation started at 80°C and ended at 116°C (160 minutes).

In the final step the pressure was reduced to 15 mbar during 15 minutes at a temperature of 120°C. By keeping the pressure and temperature at 15 mbar and 120°C, respectively, for approximately 270 minutes, the reaction was finished.

The OH-number of the final polycarbonate diol was 114 mg KOH/g, corresponding to an approximate molecular weight of 1000 g/mol.

### Example 2

Synthesis of a polycarbonate diol with increased molecular weight based on Neopentyl Glycol.

An oligocarbonate was synthesised in two steps, a transesterification and a prepolymerisation step, at atmospheric pressure. In the first step DMC and NEO were mixed and heated under stirring. When the total amount of NEO was dissolved in the liquid, an aqueous solution of NaOH was added slowly dropwise. The molar ratio of the above components was 1:2.0:0.005 (NEO:DMC:NaOH). The mixture was set to reflux with a starting temperature of 95°C. When the temperature had reached 79°C (360 minutes), formed methanol and remaining DMC were distilled off as an azeotrope under atmospheric pressure. Distillation started at 83°C and ended at 120°C.

5% by weight of the oligocarbonate was added to a NEO based polycarbonate diol with an OH-number of 114 mg KOH/g, synthesised according to example 1. The percentage of added oligocarbonate was based on the weight of the original NEO polycarbonate diol. The pressure was reduced to 15 mbar during 10 minutes at a temperature of 120°C. By keeping the pressure and temperature at 15 mbar and 120°C, respectively, for approximately 240 minutes, the reaction was finished.

The OH-number of the final polycarbonate diol was 60 mg KOH/g, corresponding to an approximate molecular weight of 2000 g/mol.

### Example 3

Synthesis of a polycarbonate diol with increased molecular weight based on Butyl Ethyl Propanediol (BEPD).

A BEPD based oligocarbonate was synthesised according to example 2 using BEPD instead of NEO and with a starting molar ratio of 1:2.0 BEPD:DMC. 15% by weight of the oligocarbonate was then added repeated times to a BEPD based polycarbonate diol, synthesised according to example 1 using BEPD instead of NEO, with an OH-number of 130 mg KOH/g. The percentage of added oligocarbonate was based on the weight of the original BEPD polycarbonate diol.

The oligocarbonate was added 4 times and with each addition the OH-number of the BEPD polycarbonate diol decreased. By keeping the pressure and temperature at 15 mbar and 120°C, respectively, for approximately 1400 minutes the reaction was finished.

The OH-number of the final polycarbonate diol was 56 mg KOH/g, corresponding to an approximate molecular weight of 2000 g/mol.

## Claims

1. A process for producing a polycarbonate diol, triol or polyol with increased molecular weight, said polycarbonate diol, triol or polyol being produced from a diol, triol or polyol and a carbon dioxide source, **characterised in that** the process comprises the steps
i) transesterification between said diol, triol or polyol and said carbon dioxide source in the presence of a transesterification catalyst and at a temperature of 80-200°C,
ii) evaporation of formed alcohol by for instance distillation at a temperature of 100-200°C and
iii) polymerisation at a temperature of 100-200°C and a pressure of 0,5-100 mbar until said polymerisation is ceased,
iv) further polymerisation, at a pressure of 0,5-100 mbar and a temperature of 100-200°C, by addition of an oligocarbonate diol, triol or polyol to the product obtained in step (iii), whereby said oligocarbonate diol, triol or polyol is added in an amount of 1-50 % by weight based on the amount of said product obtained in said step (iii) and said oligocarbonate diol, triol or polyol is obtained by
a) transesterification between a diol, triol or polyol and a carbon dioxide source in the presence of a transesterification catalyst and at a temperature of 80-200°C and
b) evaporation of formed alcohol by for instance distillation at a temperature of 100-200°C,
whereby a polycarbonate diol, triol or polyol with a number average molecular weight of at least 1000 g/mol is obtained.

2. The process according to Claim 1, **characterised in that** the number average molecular weight is 1000-10000 g/mol, such as 1000-5000 g/mol or 1500-4500 g/mol.

3. The process according to any of the Claims 1-2, **characterised in that** the pressure during polymerisation is 0.5-20 mbar.

4. The process according to any of the Claims 1-3, **characterised in** a molar ratio in step (i) between said diol, triol or polyol and said carbon dioxide source of between 1:1 and 1:2.

5. The process according to any of the Claims 1-4, **characterised in** a molar ratio in step (iv)(a) between said diol, triol or polyol and said carbon dioxide source of between 1:1 and 1:3.

6. The process according to any of the Claims 1-5, **characterised in that** said oligocarbonate diol, triol or polyol in step (iv) is added in an amount of 5-20% by weight, based on the weight of the product obtained in step (iii).

7. The process according to any of the claims 1-6, **characterised in that** step (iv) is repeated to further increase the molecular weight of the obtained polycarbonate diol, triol or polyol.

8. The process according to any of the Claims 1-7, **characterised in that** said diol, triol or polyol is a 5,5-dihydroxyalkyl-1,3-dioxane, a 2-carboxy-2-alkyl-1,3-propanediol, a 2-hydroxy-1,3-propanediol, a 2-hydroxy-2-alkyl-1,3-propanediol, a 2-alkyl-1,3-propanediol, a 2,2-dialkyl-1,3-propanediol, a 2-alkyl-2-hydroxyalkyl-1,3-propanediol, a 2,2-dihydroxyalkyl-1,3-propanediol or a dimer, trimer, polymer and/or copolymer of two or more of said 1,3-propanediols or 1,3-dioxanes.

9. The process according to any of the Claims 1-7, **characterised in that** said diol, triol or polyol is a mono, di, tri or polyethylene glycol, a mono, di, tri or polypropylene glycol, a mono, di, tri or polybutylene glycol, polytetramethylene glycol, 2,2-dimethylolpropionic acid, 1,4-butanediol, 1,5-pentanediol 1,6-hexanediol, 1,6-cyclohexanedimethanol, 1,1-cyclohexanedimethanol, 5,5-dihydoxymethyl-1,3-dioxane, 2-methyl-1,3-propanediol, 2-propyl-2-methyl-1,3-propanediol, 2,2-diethyl-1,3-propanediol, 2-ethyl-2-methyl-1,3-propanediol, 2-butyl-2-ethyl-1,3-propanediol, neopentyl glycol, dimethylolpropane, 1,1-dimethylolcyclohexane, glycerol, 1,1-dimethylolnorbornane, 1,1-dimethylolnorbornene, 9-bis(1,1-dimethyl-2-hydroxyethyl)-2,4,9,10-tetraoxaspiro[5,5]undecane, 1,3-cyclohexanediol, 1,4-cyclohexanediol, isosorbide, trimethylolethane, trimethylolpropane, diglycerol, ditrimethylolethane, ditrimethylolpropane, pentaerythritol, dipentaerythritol, tripentaerythritol, polypentaerythritol, anhydroenneaheptitol, tetramethylolcyclohexanol, sorbitol or mannitol.

10. The process according to any of the Claims 1-9, **characterised in that** said carbon dioxide source includes dimethyl carbonate, diethyl carbonate, diphenyl carbonate and/or urea.

11. The process according to any of the Claims 1-10, **characterised in that** said transesterification catalyst is an alkali metal or an alkaline earth metal hydroxide and/or a metal alcoholate of an aliphatic alcohol.

## Patentansprüche

1. Verfahren zur Herstellung eines Polycarbonatdiol, -triol oder -polyols mit erhöhtem Molekulargewicht, wobei das Polycarbonatdiol, -triol oder -polyol aus einem Diol, Triol oder Polyol und einer Kohlendioxidquelle hergestellt wird, **dadurch gekennzeichnet, dass** das Verfahren die Schritte umfasst
i) Umesterung zwischen dem Diol, Triol oder Polyol und der Kohlendioxidquelle in der Gegenwart eines Umesterungskatalysators und bei einer Temperatur von 80 bis 200°C,
ii) Abdampfen des gebildeten Alkohols durch, beispielsweise, Destillation bei einer Temperatur von 100 bis 200°C und
iii) Polymerisieren bei einer Temperatur von 100 bis 200°C und einem Druck von 0,5 bis 100 mbar bis die Polymerisation aufhört,
iv) weitere Polymerisation, bei einem Druck von 0,5 bis 100 mbar und einer Temperatur von 100 bis 200°C, durch Zugabe eines Oligocarbonatdiol, -triol oder -polyols zu dem aus Schritt iii) erhaltenen Produkt, wobei das Oligocarbonatdiol, -triol oder -polyol in einer Menge von 1 bis 50 Gew.%, bezogen auf die Menge des in Schritt iii) erhaltenen Produkts, hinzugefügt wird und das Oligocarbonatdiol, -triol oder -polyol erhalten wird durch
a) Umesterung zwischen einem Diol, Triol oder Polyol und einer Kohlendioxidquelle in der Gegenwart eines Umesterungskatalysators bei einer Temperatur von 80 bis 200°C und
b) Abdampfen des gebildeten Alkohols durch, beispielsweise, Destillation bei einer Temperatur von 100 bis 200°C,
wobei ein Polycarbonatdiol, -triol oder -polyol mit einem Zahlen-gemittelten Molekulargewicht von wenigstens 1000 g/mol gewonnen wird.

2. Verfahren nach Anspruch 1, **dadurch gekennzeichnet, dass** das Zahlen-gemittelte Molekulargewicht 1000 bis 10000 g/mol, wie z.B. 1000 bis 5000 g/mol oder 1500 bis 4500 g/mol, beträgt.

3. Verfahren nach einem der Ansprüche 1-2, **dadurch gekennzeichnet, dass** der Druck während der Polymerisation 0,5 bis 20 mbar beträgt.

4. Verfahren nach einem der Ansprüche 1-3, **gekennzeichnet durch** ein Molverhältnis in Schritt (i) zwischen dem Diol, Triol oder Polyol und der Kohlendioxidquelle von zwischen 1:1 und 1:2.

5. Verfahren nach einem der Ansprüche 1-4, **gekennzeichnet durch** ein Molverhältnis in Schritt (iv)(a) zwischen dem Diol, Triol oder Polyol und der Kohlendioxidquelle von zwischen 1:1 und 1:3.

6. Verfahren nach einem der Ansprüche 1-5, **dadurch gekennzeichnet, dass** das Oligocarbonatdiol, -triol oder -polyol in Schritt (iv) in einer Menge von 5 bis 20 Gew.%, bezogen auf das Gewicht des in Schritt (iii) erhaltenen Produkts, hinzugefügt wird.

7. Verfahren nach einem der Ansprüche 1-6, **dadurch gekennzeichnet, dass** Schritt (iv) wiederholt wird, um das Molekulargewicht des gewonnenen Polycarbonatdiol, -triol oder -polyol weiter zu erhöhen.

8. Verfahren nach einem der Ansprüche 1-7, **dadurch gekennzeichnet, dass** das Diol, Triol oder Polyol ein 5,5-Dihydroxyalkyl-1,3-dioxan, ein 2-Carboxy-2-alkyl-1,3-propandiol, ein 2-Hydroxy-1,3-propandiol, ein 2-Hydroxy-2-alkyl-1,3-propandiol, ein 2-Alkyl-1,3-propandiol, ein 2,2-Dialkyl-1,3-propandiol, ein 2-Alkyl-2-hydroxyalkyl-1,3-propandiol, ein 2,2-Dihydroxyalkyl-1,3-propandiol oder ein Dimer, Trimer, Polymer und/oder Copolymer von zwei oder mehreren der genannten 1,3-Propandiolen oder 1,3-Dioxanen ist.

9. Verfahren nach einem der Ansprüche 1-7, **dadurch gekennzeichnet, dass** das Diol, Triol oder Polyol ein Mono-, Di-, Tri- oder Polyethylenglykol, ein Mono-, Di-, Tri- oder Polypropylenglykol, ein Mono-, Di-, Tri- oder Polybutylenglykol, Polytetramethylenglykol, 2,2-Dimethylolpropionsäure, 1,4-Butandiol, 1,5-Pentandiol, 1,6-Hexandiol, 1,6-Cyclohexandimethanol, 1,1-Cyclohexandimethanol, 5,5-Dihydroxymethyl-1,3-dioxan, 2-Methyl-1,3-propandiol, 2-Propyl-2-methyl-1,3-propandiol, 2,2-Diethyl-1,3-propandiol, 2-Ethyl-2-methyl-1,3-propandiol, 2-Butyl-2-ethyl-1,3-propandiol, Neopentylglykol, Dimethylolpropan, 1,1-Dimethylolcyclohexan, Glycerol, 1,1-Dimethylolnorbornan, 1,1-Dimethylolnorbornen, 9-bis(1,1-Dimethyl-2-hydroxyethyl)-2,4,8,10-tetraoxaspiro[5,5]undecan, 1,3-Cyclohexandiol, 1,4-Cyclohexandiol, Isosorbid, Trimethylolethan, Trimethylolpropan, Diglycerol, Ditrimethylolethan, Ditrimethylolpropan, Pentaerythritol, Dipentaerythritol, Tripenaerythritol, Polypentaerythritol, Anhydroenneaheptitol, Tetramethylolcyclohexanol, Sorbitol oder Mannitol ist.

10. Verfahren nach einem der Ansprüche 1-9, **dadurch gekennzeichnet, dass** die Kohlendioxidquelle Dimethylcarbonat, Diethylcarbonat, Diphenylcarbonat und/oder Harnstoff umfasst.

11. Verfahren nach einem der Ansprüche 1-10, **dadurch gekennzeichnet, dass** der Umesterungskatalysator ein Alkalimetall- oder Erdalkalimetallhydroxid und/oder ein Metallalkoholat eines aliphatischen Alkohols ist.

## Revendications

1. Procédé pour produire un polycarbonate diol, triol ou polyol ayant une masse moléculaire accrue, ledit polycarbonate diol, triol ou polyol étant produit à partir d'un diol, triol ou polyol et d'une source de dioxyde de carbone, **caractérisé en ce que** le procédé comprend les étapes
i) transestérification entre ledit diol, triol ou polyol et ladite source de dioxyde de carbone en présence d'un catalyseur de transestérification et à une température de 80-200°C,
ii) évaporation de l'alcool formé par, exemple, par distillation à une température de 100-200°C et
iii) polymérisation à une température de 100-200°C et une pression de 0,5-100 mbar jusqu'à ce que ladite polymérisation ait cessé,
iv) polymérisation supplémentaire, à une pression de 0,5-100 mbar et une température de 100-200°C, par addition d'un oligocarbonate diol, triol ou polyol au produit obtenu dans l'étape (iii), où ledit oligocarbonate diol, triol ou polyol est ajouté en une quantité de 1-50 % en poids sur la base de la quantité dudit produit obtenu dans ladite étape (iii) et ledit oligocarbonate diol, triol ou polyol est obtenu par
a) transestérification entre un diol, triol ou polyol et une source de dioxyde de carbone en présence d'un catalyseur de transestérification et à une température de 80-200°C et
b) évaporation de l'alcool formé, par exemple par distillation à une température de 100-200°C,
où un polycarbonate diol, triol ou polyol ayant une masse moléculaire moyenne en nombre d'au moins 1000 g/mol est obtenu.

2. Procédé selon la revendication 1 **caractérisé en ce que** la masse moléculaire moyenne en nombre est 1000-10000 g/mol, comme 1000-5000 g/mol ou 1500-4500 g/mol.

3. Procédé selon l'une quelconque des revendications 1-2 **caractérisé en ce que** la pression pendant la polymérisation est 0,5-20 mbar.

4. Procédé selon l'une quelconque des revendications 1-3 **caractérisé par** un rapport molaire dans l'étape (i) entre ledit diol, triol ou polyol et ladite source de dioxyde de carbone entre 1 : 1 et 1 : 2.

5. Procédé selon l'une quelconque des revendications 1-4 **caractérisé par** un rapport molaire dans l'étape (iv)(a) entre ledit diol, triol ou polyol et ladite source de dioxyde de carbone entre 1 : 1 et 1 : 3.

6. Procédé selon l'une quelconque des revendications 1-5 **caractérisé en ce que** ledit oligocarbonate diol, triol ou polyol dans l'étape (iv) est ajouté en une quantité de 5-20 % en poids, sur la base du poids du produit obtenu dans l'étape (iii).

7. Procédé selon l'une quelconque des revendications 1-6 **caractérisé en ce que** l'étape (iv) est répétée pour augmenter encore la masse moléculaire du polycarbonate diol, triol ou polyol obtenu.

8. Procédé selon l'une quelconque des revendications 1-7 **caractérisé en ce que** ledit diol, triol ou polyol est un 5,5-dihydroxyalkyl-1,3-dioxane, un 2-carboxy-2-alkyl-1,3-propanediol, un 2-hydroxy-1,3-propanediol, un 2-hydroxy-2-alkyl-1,3-propanediol, un 2-alkyl-1,3-propanediol, un 2,2-dialkyl-1,3-propanediol, un 2-alkyl-2-hydroxyalkyl-1,3-propanediol, un 2,2-dihydroxyalkyl-1,3-propanediol ou un dimère, trimère, polymère et/ou copolymère de deux ou plusieurs desdits 1,3-propanediols ou 1,3-dioxanes.

9. Procédé selon l'une quelconque des revendications 1-7 **caractérisé en ce que** ledit diol, triol ou polyol est un mono, di, tri ou polyéthylèneglycol, un mono, di, tri ou polypropylèneglycol, un mono, di, tri ou polybutylèneglycol, le polytétraméthylèneglycol, l'acide 2,2-diméthylolpropionique, le 1,4-butanediol, le 1,5-pentanediol, le 1,6-hexanediol, le 1,6-cyclohexanediméthanol, le 1,1-cyclohexanediméthanol, le 5,5-dihydroxyméthyl-1,3-dioxane, le 2-méthyl-1,3-propanediol, le 2-propyl-2-méthyl-1,3-propanediol, le 2,2-diéthyl-1,3-propanediol, le 2-éthyl-2-méthyl-1,3-propanediol, le 2-butyl-2-éthyl-1,3-propanediol, le néopentylglycol, le diméthylolpropane, le 1,1-diméthylolcyclohexane, le glycérol, le 1,1-diméthylolnorbornane, le 1,1-diméthylolnorbornène, le 9-bis(1,1-diméthyl-2-hydroxyéthyl)-2,4,8,10-tétraoxaspiro[5,5]undécane, le 1,3-cyclohexanediol, le 1,4-cyclohexanediol, l'isosorbide, le triméthyloléthane, le triméthylolpropane, le diglycérol, le ditriméthyloléthane, le ditriméthylolpropane, le pentaérythritol, le dipentaérythritol, le tripentaérythritol, le polypentaérythritol, l'anhydroenneaheptitol, le tétraméthylolcyclohexanol, le sorbitol ou le mannitol.

10. Procédé selon l'une quelconque des revendications 1-9 **caractérisé en ce que** ladite source de dioxyde de carbone inclut le carbonate de diméthyle, le carbonate de diéthyle, le carbonate de diphényle et/ou l'urée.

11. Procédé selon l'une quelconque des revendications 1-10 **caractérisé en ce que** ledit catalyseur de transestérification est un hydroxyde de métal alcalin ou de métal alcalino-terreux et/ou un alcoolate métallique d'un alcool aliphatique.
